(19)

Europäisches
Patentamt
European
Patent Office
Office européen
des brevets

(11)     **EP 3 117 543 B1**

## (12)       EUROPEAN PATENT SPECIFICATION

(45) Date of publication and mention
of the grant of the patent:
**19.12.2018   Bulletin 2018/51**

(21) Application number: **15761961.0**

(22) Date of filing: **11.02.2015**

(51) Int Cl.:
***H04W 8/00*** *(2009.01)*

(86) International application number:
**PCT/US2015/015454**

(87) International publication number:
**WO 2015/138076 (17.09.2015 Gazette 2015/37)**

(54) **SYSTEMS, METHODS, AND DEVICES FOR DEVICE-TO-DEVICE DISCOVERY AND COMMUNICATION**

SYSTEME, VERFAHREN UND VORRICHTUNGEN ZUR ERKENNUNG VON VORRICHTUNG-ZU-VORRICHTUNG UND KOMMUNIKATION

SYSTÈMES, PROCÉDÉS ET DISPOSITIFS DE DÉCOUVERTE ET DE COMMUNICATION DE DISPOSITIF À DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2014   US 201461953622 P**
**23.12.2014   US 201414582035**

(43) Date of publication of application:
**18.01.2017   Bulletin 2017/03**

(73) Proprietor: **Intel IP Corporation**
**Santa Clara, CA 95054 (US)**

(72) Inventors:
• **XIONG, Gang**
**Beaverton, Oregon 97006 (US)**
• **CHATTERJEE, Debdeep**
**Santa Clara, California 95050 (US)**
• **KHORYAEV, Alexey**
**Nizhny Novgorod 603105 (RU)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**US-A1- 2011 235 601**

• **ERICSSON: "Synchronization Signals and Channel Design for D2D Discovery and Communication", 3GPP DRAFT; R1-135903 D2D SYNCHRONIZATION SIGNALS - UPDATED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050751320, Retrieved from the Internet: URL:http://www.3gpp.org/ftp/tsg_ran/WG1_RL 1/TSGR1_75/Docs/ [retrieved on 2013-11-13]**
• **HUAWEI ET AL: "Considerations on timing for D2D", 3GPP DRAFT; R1-135047, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734750, Retrieved from the Internet: URL:http://www.3gpp.org/ftp/Meetings_3GPP_ SYNC/RAN/RAN1/Docs/ [retrieved on 2013-11-13]**

- ERICSSON: "Physical Channels design for D2D", 3GPP DRAFT; R1-135806 D2D CHANNELS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735447, Retrieved from the Internet: URL:http://www.3gpp.org/ftp/Meetings_3GPP_SYNC/RAN/RAN1/Docs/ [retrieved on 2013-11-13]
- CATT: 'Details of discovery signal design' R1-140097, 3GPP TSG RAN WG1 MEETING #76 10 February 2014, PRAGUE, CZECH REPUBLIC, XP050735663
- NOKIA ET AL.: 'Discovery signal design' R1-140574, 3GPP TSG RAN WG1 MEETING #76 10 February 2014, PRAGUE, CZECH REPUBLIC, XP050736101
- ALCATEL -LUCENT SHANGHAI BELL ET AL.: 'D2D transmission timing' R1-140177, 3GPP TSG RAN WG1 MEETING #76 10 February 2014, XP050735738
- LG ELECTRONICS: 'D2D communication signal transmission timing' R1-140340, 3GPP TSG RAN WG1 MEETING #76 10 February 2014, PRAGUE, CZECH REPUBLIC, XP050735887
- HUAWEI ET AL.: 'On cyclic prefix length for D2D discovery/communication' R1-140058, 3GPP TSG RAN WG1 MEETING #76 10 February 2014, PRAGUE, CZECH REPUBLIC, XP050735624

# Description

## Technical Field

The present disclosure relates to device-to-device communication and more particularly relates to determining a gap size or cyclic prefix length for device-to-device discovery and data communication.

## Background art

3GPP TSG RAN WG1 Meeting #75, R1-135047, San Francisco, USA, 11-15 November 2013 relates to considerations on timing for D2D, and discloses a fixed switch time between D2D transmitting and reception which is reserved in each D2D subframe either in the head or tail of each D2D subframe. One OFDM symbol per D2D subframe is removed and the saved time is added to gap and extend CP length.

3GPP TSG RAN WG1 Meeting #75, R1-135903, San Francisco, USA, 11-15 November 2013 discloses a PD2DSCH with extended CP and guard period.

3GPP TSG RAN WG1 Meeting #76, R1-140097, Prague, Czech Republic, 10-14 February 2014 relates to discovery signal design wherein the guard period length depends on whether or not the guard period is required for AGC measurement/adjustment..

## Summary

The present invention provides an apparatus for use in a user equipment as well as to a corresponding method and machine-readable storage according to respective claims 1, 2 and 4.

The embodiments and/or examples in the following description which are not covered by the appended claims are considered as not being part of the present invention.

## Brief Description of the Drawings

FIG. 1 is a schematic diagram illustrating a wireless communication system and environment consistent with embodiments disclosed herein.

FIG. 2 is a schematic diagram illustrating a basic structure for a time-frequency resource consistent with embodiments disclosed herein.

FIG. 3 is a schematic block diagram illustrating a discovery zone consistent with embodiments disclosed herein.

FIG. 4 is a schematic diagram illustrating a structure for a device-to-device discovery signal or data communication signal consistent with embodiments disclosed herein.

FIG. 5 is a schematic block diagram of a wireless communication device consistent with embodiments disclosed herein.

FIG. 6 is a schematic flow-chart diagram illustrating methods for transmitting a device-to-device communication consistent with embodiments disclosed herein.

FIG. 7 is a schematic flow-chart diagram illustrating methods for receiving a device-to-device communication consistent with embodiments disclosed herein.

FIG. 8 is a schematic flow-chart diagram illustrating methods for configuring a cyclic prefix length for device-to-device communication consistent with embodiments disclosed herein.

FIG. 9 is a schematic diagram of a mobile device consistent with embodiments disclosed herein.

## Detailed Description of Preferred Embodiments

Wireless mobile communication technology uses various standards and protocols to transmit data between a base station and a wireless communication device. Wireless communication system standards and protocols can include, for example, the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard, which is commonly known to industry groups as Wi-Fi. In a 3GPP radio access network (RAN) according to LTE, the base station is termed Evolved Universal Terrestrial Radio Access Network (E-UTRAN) Node B (also commonly denoted as evolved Node B, eNodeB, or eNB). A base station may communicate with a wireless communication device, known as user equipment (UE) in LTE. Although the present disclosure is presented with terminology and examples generally directed towards 3GPP systems and standards, the teaching disclosed herein may be applied to any type of wireless network or communication standard.

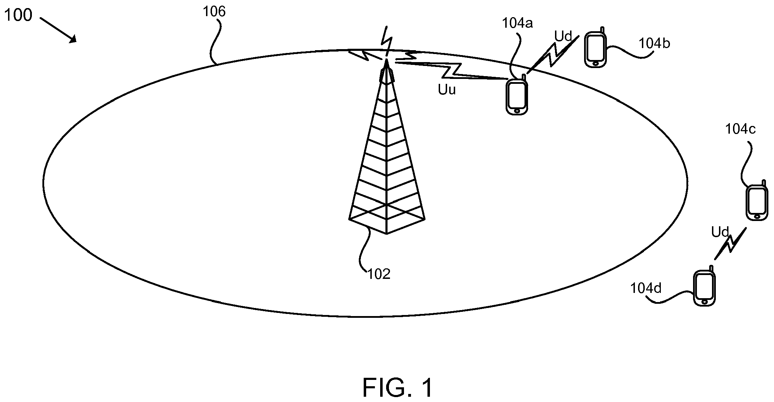

FIG. 1 is a schematic diagram illustrating a communication system 100 that includes an eNB 102 and a plurality of UEs 104a, 104b, 104c, and 104d. The eNB 102 provides communication services within a coverage area 106. The eNB 102 and UEs 104a-104d may include a radio that is configured to transmit and receive signals in a licensed wireless spectrum. When in coverage, the UEs 104a-104d may communicate with the eNB 102 using a Uu air interface on a licensed cellular spectrum. Because UE 104a is within the coverage area 106, the UE 104a is referred to as in coverage and may send communications to and receive communications from the eNB 102. The UE 104b is outside the coverage area 106 but is within communication range of the in-coverage UE 104a. Thus, UE 104b may be referred to as within partial network coverage because it can indirectly receive information from the eNB 102 via the in-coverage UE 104a.

Two out-of-coverage UEs 104c and 104d are shown which are outside the coverage area 106 and are not within communication range of any in-coverage UEs.

The UEs 104 and eNB 102 may communicate control data and/or user data with each other. A downlink (DL) transmission in an LTE network can be defined as a communication from the eNB 102 to a UE 104a-104d, and an uplink (UL) transmission can be defined as a communication from a UE 104a-104d to the eNB 102. In addition to DL and UL transmissions over the Uu interface, the UEs 104a-104d are also shown communicating directly with each other over a Ud air interface. For example, the in-coverage UE 104a is shown in communication with the partial coverage UE 104b and the two out-of-coverage UEs 104c and 104d are shown in communication with each other. Direct communication between devices is commonly known as proximity services (ProSe), device-to-device (D2D) communication, or peer-to-peer (P2P) communication. In D2D, a UE 104a-104d is able to communicate directly with another UE 104a-104d without routing communications via an eNB 102 or a core network, as illustrated by the Ud D2D interface in FIG. 1.

D2D is a powerful technique for increasing network throughput by enabling direct communications between mobile stations rather than using network infrastructure, and has a wide variety of applications. For example, D2D has been proposed for local social networks, content sharing, location-based marketing, service advertisements, public safety networks, mobile-to-mobile applications, and other services. D2D communications are of interest due to their ability to reduce load on a core network or a RAN, increase data rates due to direct and short communication paths, provide public safety communication paths, and provide other functionality. In some embodiments, the UEs 104a-104d may be connected to different eNBs 102 or to completely different networks operated by different mobile network operators (MNOs).

There are various alternatives to realize such a direct communication path between mobile devices. In one embodiment, the D2D air interface Ud could be realized by some type of short-range technology, such as Bluetooth or Wi-Fi, or by reusing licensed LTE spectrum, such as a UL spectrum. Furthermore, D2D communications can be generally divided into two parts. The first part is device discovery, whereby UEs 104a-104d are able to determine that they are within range and/or available for D2D communication. Proximity detection may be assisted by network infrastructure, may be performed at least partially by the UEs 104a-104d, and/or may be performed largely independent of the network infrastructure. The second part is direct communication, or D2D data communication, between UEs 104a-104d, which includes a process to establish a D2D session between UEs 104a-104d as well as the actual communication of user or application data. D2D communication may or may not be under continuous control of an MNO. For example, the UEs 104a-104d may not need to have an active connection with an eNB 102 in order to take part in D2D communications.

The present disclosure presents various devices, systems, and methods for D2D discovery, configuration, or communication. The present disclosure also discusses location guard periods, reference signals, or the like within discovery packet or data communication packets, such as an orthogonal frequency-division multiplexing (OFDM) packet or subframe. As used herein, the term "communication" is given to mean a signal or packet of information which may include a preamble or header and payload data. The term communication is to be broadly construed as referring not only to a logical data structure but also to a logical resource structure. For example, the term discovery packet, as used herein, encompasses not only payload data but also physical layer signaling (such as reference signals) and control data. Furthermore, the term "peer-to-peer communication" and "D2D communication" are given to mean herein any communication between D2D devices, including D2D direct discovery and/or data communications.

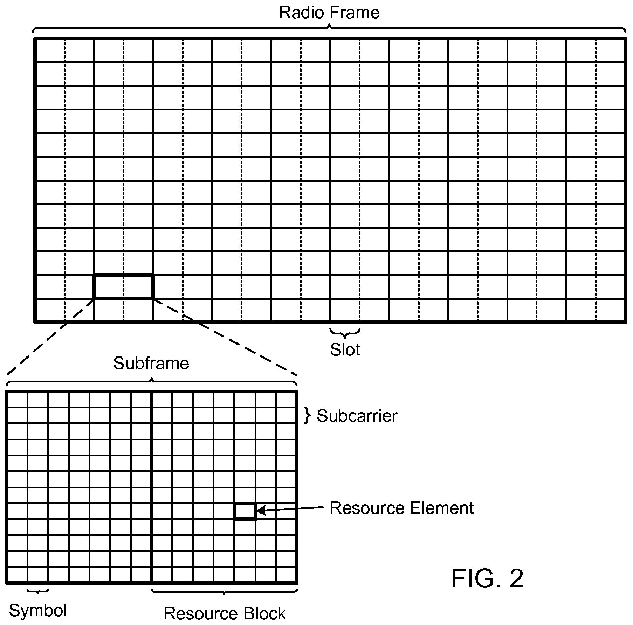

As background, a discussion of resource structure may be helpful. FIG. 2 illustrates one embodiment of a basic structure for a time-frequency resource as defined in LTE. The resource includes a plurality of radio frames with a length of about 10 milliseconds (ms). Each radio frame includes a grid of subframes, each with a length of about 1 ms. Each subframe includes a plurality of subcarriers and symbols which form resource elements. In one embodiment, a subframe includes two slots, or resource blocks, which each span a plurality of symbols (seven time periods) and subcarriers (e.g., 12 frequency bands). In a normal cyclic prefix case, each resource block includes seven symbols, as depicted. In an extended cyclic prefix case, each resource block may include six symbols, for example.

In situations where D2D communications use a licensed wireless resource, it may be necessary for an eNB 102 or other device to allocate resources for different purposes. For within network coverage scenarios, an eNB 102 may periodically allocate certain discovery resources in the form of D2D discovery regions for UEs 104a-104d to transmit discovery information to discover each other. The discovery information may be in the form of discovery packet with payload information or a discovery packet preceded by a discovery preamble. The concepts disclosed herein can be straightforwardly adapted for other discovery signal structures or even D2D communication packets. The number of resource blocks (RB) required for discovery packet transmission in D2D discovery design, which may be denoted as $L_{RB}^{D2D}$, can be one or more, depending on the payload size and overall discovery performance requirements.

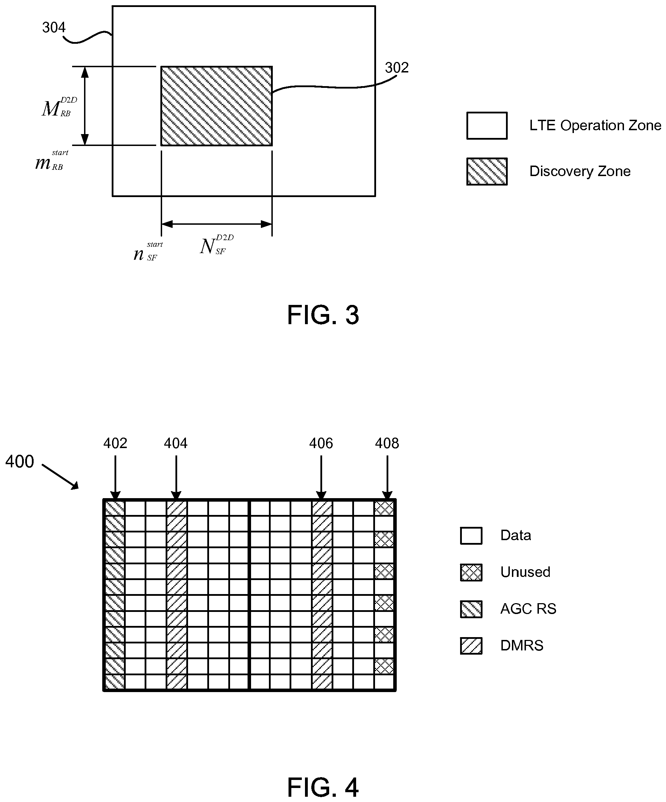

For discussion purposes, it is assumed that discovery regions are composed of periodic discovery zones, with each discovery zone including some RBs in the frequency domain and several subframes in the time domain. FIG. 3 shows an example of a discovery zone 302 within an LTE operation zone 304. In the figure, $M_{RB}^{D2D}$ denotes the number of allocated RBs, $m_{RB}^{start}$ denotes the starting RB index, $N_{SF}^{D2D}$ denotes the number of subframes, and $n_{SF}^{start}$ denotes the starting subframe index of the discovery zone 302. The information regarding the partitioning of the D2D discovery regions can be semi-statically signaled by the eNB 102 using radio resource control signaling, for example, via system information blocks (SIBs) for within network coverage scenarios. For partial network coverage scenarios, information regarding configuration of the discovery resources (or other resources for D2D communication) can be forwarded by one or a plurality of UEs that are within network coverage to the UEs that are outside network coverage (e.g., from UE 104a to UE 104b). For out-of-network coverage scenarios, the discovery zone may be predefined by the 3GPP standard (and stored by a UE 104a-104d) or broadcasted by a centralized D2D device. In one embodiment, the discovery zone may be associated with and signaled by an independent synchronization source, with the configuration information further forwarded by other dependent/gateway synchronization sources.

In one embodiment, D2D discovery signals or D2D data packets may be sent using existing physical uplink shared channel (PUSCH) structure and a demodulation reference signal (DMRS) sequence may be reused for D2D discovery message transmission.

Consider a general case wherein each discovery resource includes K primary RB-pairs. For an M by N resource allocation scheme K = M x N, and each discovery packet transmission spans N subframes and M resource blocks. FIG. 4 illustrates the potential physical layer structure for D2D discovery for a single subframe. In the figure, a first single carrier Frequency Division Multiple Access (SC-FDMA) symbol 402 of the discovery resource is reserved for an automatic gain control (AGC) symbol while a last SC-FDMA symbol 408 can be partially (as shown in the figure) or fully allocated for a guard period or gap. Several options can be considered for AGC symbol generation. One approach is to extend a cyclic prefix of a second SC-FDMA symbol to one additional full symbol and allocate the extended cyclic prefix in the first SC-FDMA symbol. An alternative option is to allocate a reference signal into the first SC-FDMA symbol. In one embodiment, to minimize impact on the existing 3GPP specification and simplify the implementation, an identical DMRS sequence in a fourth symbol 404 or eleventh symbol 406 can be reused to generate the AGC symbol.

To generate a gap size of one-half symbol in the discovery resource (or other D2D communication), the gap or guard period is generated by applying interleaved frequency-division multiple access (IFDMA) signal structure with a RePetition Factor (RPF) of two in the last SC-FDMA symbol 408 and puncturing the second repetition block in the time domain. Note that either data or a reference signal can be allocated in the last SC-FDMA symbol 408.

In this disclosure, we focus on the signaling mechanisms to support different gap sizes and cyclic prefix lengths for D2D discovery and D2D direct data communication. Note that although the concepts above were described with regard to D2D discovery operation, they may also be applied to D2D data communication physical structure design as well.

In one embodiment, the present disclosure proposes mechanisms to indicate or determine a gap size (or guard period length) for D2D discovery and D2D direct data communication. In one embodiment we propose mechanisms to indicate or determine a cyclic prefix length for D2D discovery and D2D direct data communication.

In this application, applicants disclose systems, methods, and devices for D2D discovery and communication. In one embodiment, a UE is configured to communicate with one or more peer UEs using a 3GPP communication standard. The UE is configured to identify a gap size for a device-to-device communication, wherein the gap size is predefined by the 3GPP communication standard. The UE is configured to identify a cyclic prefix length for the device-to-device communication and transmit the device-to-device communication comprising a subframe having a PUSCH structure. The subframe has the identified cyclic prefix length, and one or more last symbols of the subframe include a gap having the identified gap size.

In one embodiment, a wireless communication device includes a communication component, a guard period component, a cyclic prefix component, and a decoding component. The communication component is configured to receive a D2D communication that includes a subframe having a plurality of SC-FDMA symbols. The guard period component is configured to determine a guard period length for the D2D communication for a gap in one or more last SC-FDMA symbols of the subframe. The cyclic prefix component is configured to determine a cyclic prefix length for the device-to-device communication based on higher-layer signaling received from the serving or camping cell when the wireless communication device is within network coverage. The decoding component is configured to decode the D2D communication based on the guard period length and the cyclic prefix length.

In one embodiment, an eNB is configured to determine one or more sets of wireless resources for peer-to-peer communications using a licensed wireless spectrum. The eNB further determines a cyclic prefix length for the peer-to-peer communications. The eNB uses higher-layer Radio Resource Control (RRC) signaling, for example, it may broadcast a system information block (SIB) wherein the SIB includes information indicating the one or more wireless resources for the peer-to-peer communications and information indicating a cyclic prefix length for each set of wireless physical resources for the peer-to-peer communications.

Gap Size

A gap or guard period can be realized by (partially or fully) puncturing of or rate matching around one or more last symbols of each D2D subframe or of a D2D transmission. In some situations, a D2D transmission may span multiple contiguous-in-time D2D subframes. For example, if the D2D discovery resource spans two contiguous D2D subframes in a frequency division duplex (FDD) system (contiguous in time) or if a D2D subframe is constrained to be followed only by a DL subframe in time division duplex (TDD) systems, then only the one or more last symbols of the last D2D subframe may include a gap. This is because consecutive subframes transmitted in the same direction by the same UE may not require a gap or guard period between them. Depending on the D2D resource configuration used for different TDD subframe configurations, consecutive D2D subframes may not be contiguous in time, and consequently, the one or more last symbol of each D2D subframe may be punctured or rate matching may be applied around the one or more last symbols of each D2D subframe.

In order for a transmitting UE to transmit and a receiving UE to receive using a proper gap size, several options may be used by the UEs to determine or identify a current gap size. In one option, a fixed gap size can be predefined. For instance, gap size of one, one-half, or two symbols can be specified in a communication standard, such as a 3GPP standard. The UEs may each include circuitry or storage, storing or indicating the gap size for D2D communication. A one or two symbol gap size may be realized by puncturing or rate matching around the last one or two symbols of each D2D subframe or the last symbol for each contiguous D2D transmission.

In a second option, ProSe-enabled UE may randomly select one of a plurality of possible gap sizes (e.g., three available gap sizes) for discovery packet transmission. From the reception perspective, receiving UEs may perform blind detection of gap sizes for discovery packet decoding. In one embodiment, a receiving UE may employ energy detection for the last one or two SC-FDMA symbols to determine whether data or a reference signal in the last symbols is punctured.

In a third option, the configuration of a gap size or guard period length may be broadcasted via an eNB 102 or a centralized D2D device. For example, an eNB 102 may periodically broadcast system information blocks (SIBs) that include the current gap size along with discovery zone configuration.

It should be noted that any of the above options may be applied for different network coverage scenarios. For instance, for within network coverage scenarios, the configuration of gap size can be signaled by an eNB 102.

For partial network coverage scenarios, the configuration of gap size may be forwarded by one or a plurality of UEs that are in coverage to UEs that are outside network coverage. For out-of-network coverage scenarios, the gap size may be predefined or broadcasted by a centralized D2D device. Similarly, the gap size may be associated with and signaled by an independent synchronization source and the configuration may be further forwarded by other dependent/gateway synchronization sources.

Cyclic Prefix Length

According to agreement by the LTE RANI working group, both extended cyclic prefix and normal cyclic prefix may be supported for D2D discovery and communication. In one embodiment, blind detection of cyclic prefix length may be avoided by preconfiguring or indicating the cyclic prefix length for a current situation to the UEs. Depending on network coverage scenarios, different options can be considered for cyclic prefix length indication.

For within network coverage scenarios, the configuration of cyclic prefix length may be broadcasted via relevant SIBs along with discovery zone configuration by a serving cell. To facilitate inter-cell discovery, a common cyclic prefix length may be configured across the network (e.g., eNBs 102 may communicate via an X2 interface to agree on the cyclic prefix length). Note that an eNB 102 may configure the cyclic prefix length based on the cell size, deployment type, etc. For partial network coverage scenarios, the configuration of cyclic prefix length may be forwarded by one or a plurality of UEs that are in coverage to the UEs that are outside network coverage.

For out-of-network coverage scenarios, cyclic prefix length configuration can be either predefined or broadcasted by a centralized D2D device or be associated with and signaled by an independent synchronization source. The configuration derived from the independent synchronization source may be forwarded by other dependent/gateway synchronization sources to devices out of range of the independent synchronization source. In one embodiment, only an extended independent synchronization source is used for out-of-coverage discovery. For example, a large synchronization error may be expected in out-of-coverage scenarios and normal cyclic prefix may not be able to accommodate the timing error.

For partial or outside network coverage and for inter-cell D2D operations with cell-specific cyclic prefix configurations, extended cyclic prefix may be configured for UE-relayed transmissions carrying such forwarded information to minimize the need for UE blind detection of the cyclic prefix length to receive the configuration information. Accordingly, in one embodiment, if such information is carried by a physical D2D synchronization channel (PD2DSCH), then the PD2DSCH channel would be configured with extended cyclic prefix.

In one embodiment, if the cyclic prefix length is configurable also for the messages/channels carrying configuration information, then blind detection of cyclic prefix lengths may be necessary to receive such forwarded configuration messages or to receive the PD2DSCH (if defined). In one embodiment, the cyclic prefix length used for the other D2D channels may be implicitly derived from the PD2DSCH if all D2D channels are defined to use a common cyclic prefix. In another embodiment, the cyclic prefix length may be indicated implicitly via D2D synchronization signals (D2DSS) or in the D2D discovery preamble. For example, the cyclic prefix length may be indicated in the preamble if a discovery preamble is transmitted separately from the D2D message part, as in some existing primary and secondary synchronization signal (PSS/SSS) designs.

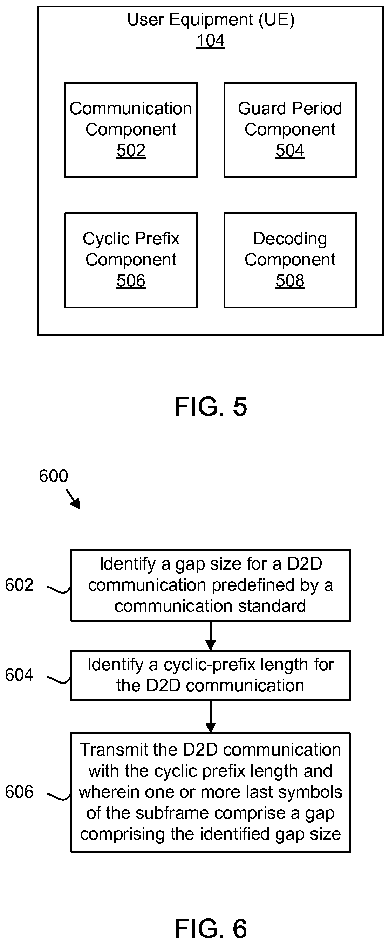

FIG. 5 is a schematic block diagram illustrating one embodiment of a UE 104 configured for D2D discovery and communication. The UE 104 includes a communication component 502, a guard period component 504, a cyclic prefix component 506, and a decoding component 508. The components 502-508 are shown by way of example and may not all be included in all embodiments. In some embodiments, only one or any combination of two or more of the components 502-508 may be included.

The communication component 502 may include one or more radios and antennas to communicate with a base station or peer device. For example, the communication component 502 may be configured to communicate with a base station or peer device using a 3GPP communication standard, such as LTE. In one embodiment, the communication component 502 may send and receive D2D communications including D2D discovery signals or D2D data communications.

The guard period component 504 is configured to determine a guard period length (i.e., gap size) for a D2D communication. For example, the guard period component 504 may determine a gap size based on any of the options discussed above to transmit or receive a D2D communication. In one embodiment, resources allocated for D2D discovery or data communication may be located next to another resource block or frame where the UE 104 needs to switch a communication mode. For example, the UE 104 may be receiving a DL communication from an eNB 102 in a later subframe or frame and may need to ramp up power on the same radio to transmit a signal following the resource allocated for D2D discovery. The guard period may allow the UE 104 to have enough time to switch between a transmission or receiving mode.

In one embodiment, once the guard period component 504 determines the guard period length the guard period component 504 may assume that the same guard period length is used for one or more later D2D discovery signals or data communications. In one embodiment, the guard period component 504 selects a guard period length as defined within a communication standard. For example, the 3GPP standard may indicate a specific gap size for D2D communications within and/or outside of network coverage. In one embodiment, the guard period component 504 may include circuitry or access memory that indicates the defined gap size. In one embodiment, the guard period component 504 identifies a guard period for a last SC-FDMA symbol or one or more last symbols.

In one embodiment, the guard period component 504 determines the guard period length based on a signal received from a base station or a centralized D2D device. For example, an eNB 102 may send an SIB that includes an indicator of a guard period length to be used for D2D communication. In one embodiment, the indicator of the guard period length may be included in an SIB that indicates one or more discovery zones for D2D discovery. When the UE 104 is within partial network coverage, the communication component 502 may receive information from an SIB forwarded by a peer UE that is within network coverage. Similarly, when the UE 104 is outside of network coverage, the UE may receive an indication of the guard period length directly from a centralized D2D device or may receive the indication indirectly via a peer device that is forwarding the information from the centralized D2D device.

In one embodiment, when transmitting, the guard period component 504 may randomly select a guard period length from a plurality of available guard period lengths. For example, a 3GPP standard may predefine that a gap size for D2D communications (including discovery) may have a size of one-half, one, or two symbols and the guard period component 504 may randomly select one of the gap sizes. In one embodiment, the guard period component 504 may select a larger gap size when a communication channel is poorer and a smaller gap size when the communication channel is better.

In one embodiment, when receiving, the guard period component 504 may blindly detect the guard period length or gap size. For example, the guard period component 504 may know that the guard period will be located in specific frames and may blindly detect the guard period size in those specific frames. In one embodiment, the guard period component 504 may blindly detect the guard period length using energy detection for one or more last SC-FDMA symbols of a D2D discovery signal or D2D communication.

In one embodiment, the guard period component 504 may provide information regarding the gap size to another component to transmit or decode a D2D communication. In one embodiment, the guard period component 504 may create the gap having the gap size by one or more of rate matching around the one or more last symbols and puncturing the one or more last symbols. In one embodiment, the communication component 502 may transmit a D2D communication that includes one or more subframes having a PUSCH structure with the one or more last symbols of the subframe including a gap having the identified gap size. In one embodiment, the communication component 502 may transmit a communication that includes nonconsecutive subframes that each include a gap. For example, subframes that are not immediately adjacent in time may each have their own gap with the determined gap size. In one embodiment, the D2D communication with a guard period having the determined guard period length may include one or more of a device-to-device discovery signal and a device-to-device data signal.

The cyclic prefix component 506 is configured to determine a cyclic prefix length for receiving or transmitting a D2D communication. For example, the cyclic prefix component 506 may select a cyclic prefix length based on any of the options discussed above. In one embodiment, the cyclic prefix component 506 determines the cyclic prefix length based on a broadcast signal received from an eNB 102. The cyclic prefix length is configured for each set of physical resources for D2D communication and discovery. For example, the UE 104 may receive the broadcast signal that indicates the cyclic prefix length when the UE 104 is within network coverage. When the UE 104 is outside of network coverage, the cyclic prefix component 506 may determine the cyclic prefix length based on a signal from a centralized peer UE. In one embodiment, the cyclic prefix component 506 is configured to determine the cyclic prefix based on information from an eNB 102 or a centralized device forwarded by a peer UE when the UE 104 is in partial network coverage. In one embodiment, the cyclic prefix length is pre-configured for one or more set of resources that may be pre-configured for partial or outside of network coverage operation. For example, a signaled or pre-configured cyclic prefix length may be associated with a discovery or communication resource pool (i.e., the cyclic prefix may be pre-configured/signaled on a per-resource pool basis).

In one embodiment, the cyclic prefix component 506 is configured to determine the cyclic prefix based on a D2D communication received from a peer device, such as a D2D discovery channel signal or D2D data signal. For example, the cyclic prefix component 506 is configured to determine the cyclic prefix length based on a preamble of the D2D communication. In one embodiment, when the UE 104 is outside of network coverage, the cyclic prefix component 506 may be configured to use an extended cyclic prefix length.

The decoding component 508 is configured to decode a D2D communication based on the guard period length and the cyclic prefix length determined by the guard period component 504 and the cyclic prefix component 506. For example, the communication component 502 may receive the D2D communication and the decoding component 508 may decode the D2D communication to retrieve or derive data or other information from the communication.

FIG. 6 is a schematic flow chart diagram illustrating a method 600 for transmitting a D2D communication, such as a D2D discovery signal or D2D data communication. In one embodiment, the method 600 is performed by a wireless communication device, such as the UE 104 of FIG. 5. In one embodiment, the UE 104 may perform the method 600 to transmit a D2D discovery signal or to transmit a PD2DSCH.

The method 600 begins and a guard period component 504 identifies 602 identify a gap size for a D2D communication. In one embodiment, the gap size is predefined by the 3GPP communication standard. The gap size may be for a gap located in a last symbol of an OFDM subframe. A cyclic prefix component 506 identifies 604 a cyclic prefix length for the D2D communication. For example, the cyclic prefix component 506 may identify 604 that a specific cyclic prefix length should be used based on an SIB, a preamble of a D2D communication, or a cyclic prefix length for D2D communications predefined by a communication standard.

A communication component 502 transmits 606 the D2D communication based on the identified gap size and cyclic prefix. The D2D communication includes a subframe having a PUSCH structure (e.g., has a same number of symbols and frequency subcarriers as PUSCH communication). In one embodiment, the gap has a gap size located in the one or more last symbols of the subframe.

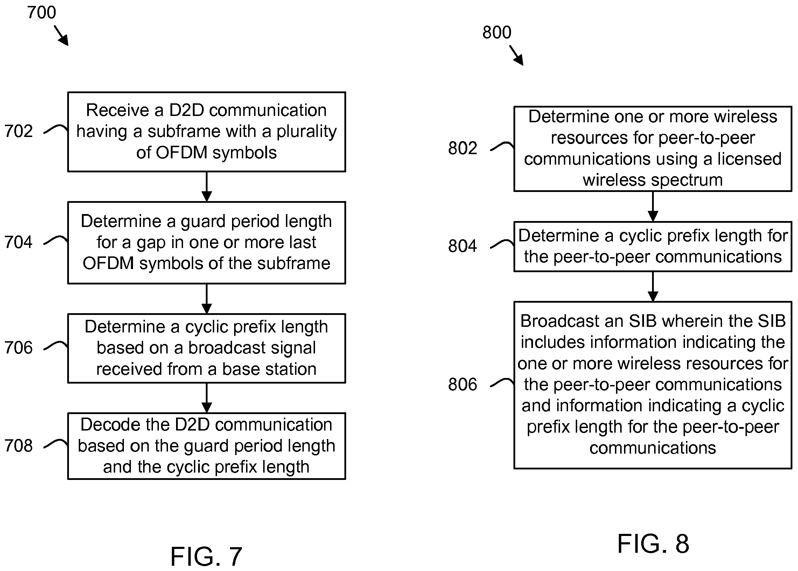

FIG. 7 is a schematic flow chart diagram illustrating a method 700 for receiving a D2D communication, such as a D2D discovery signal or D2D data communication. In one embodiment, the method 700 is performed by a wireless communication device, such as the UE 104 of FIG. 5. In one embodiment, the UE 104 may perform the method 700 to receive and decode a D2D discovery signal or to receive and decode a PD2DSCH.

The method 700 begins and a communication component 502 receives 702 a D2D communication that includes a subframe having a plurality of SC-FDMA symbols. For example, the D2D communication may have an OFDM structure similar to a PUSCH. A guard period component 504 determines 704 a guard period length for the D2D communication for a gap in one or more last SC-FDMA symbols of the subframe. For example, the guard period component 504 may determine 704 the guard period length based on blind detection, a predefined gap size, or any other method or option discussed herein.

A cyclic prefix component 506 determines 706 a cyclic prefix length for the D2D communication. Determining 706 the cyclic prefix length may include determining based on a broadcast signal received from a base station, such as an eNB 102, when the wireless communication device is within network coverage. For example, the broadcast signal may include an SIB from an eNB 102 when the UE 104 is within network coverage or a broadcast from a centralized D2D device when the UE 104 is outside of network coverage. The cyclic prefix component 506 may determine 706 the cyclic prefix length using any of the methods or options discussed herein. In fact, the cyclic prefix component 506 may determine 706 the cyclic prefix length using a different method depending on whether the wireless communication device is within network coverage, within partial network coverage, or outside of network coverage.

A decoding component 508 decodes 708 the D2D communication based on the guard period length and the cyclic prefix length determined by the guard period component 504 and the cyclic prefix component 506.

FIG. 8 is a schematic flow chart diagram illustrating a method 800 for configuring a cyclic prefix length for D2D communication by one or more wireless communication devices. In one embodiment, the method 800 is performed by an eNB 102 to configure wireless communication device D2D communication at one or more UEs 104, such as the UE 104 of FIG. 5.

The method 800 begins and the eNB 102 determines 802 one or more licensed wireless resources for peer-to-peer communications. For example, the eNB 102 may identify a portion of the LTE operation zone for usage as a discovery zone. The eNB 102 determines 804 a cyclic prefix length for the peer-to-peer communications. For example, the eNB 102 determine 804 the cyclic prefix length based on one or more of a cell size, a deployment type, interference, or the like.

The eNB 102 broadcasts 806 an SIB wherein the SIB includes information indicating the one or more wireless resources for the peer-to-peer communications and information indicating a cyclic prefix length for the peer-to-peer communications. In one embodiment, the SIB may further include information indicating a gap size for one or more last symbols of a peer-to-peer communication subframe. For example, the information may indicate a gap size of one of one-half symbol, one symbol, and two symbols.

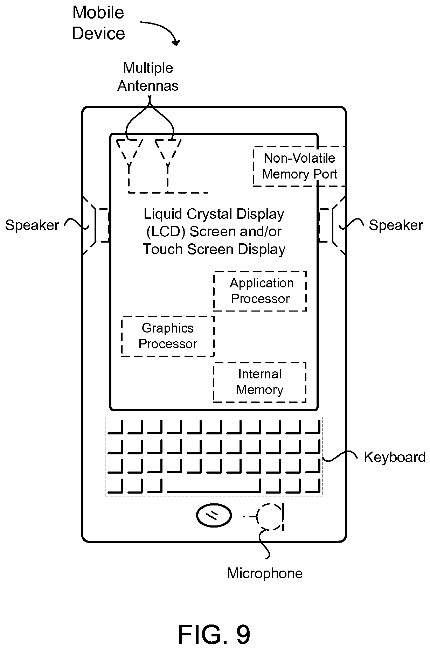

FIG. 9 is an example illustration of a mobile device, such as a UE, a mobile station (MS), a mobile wireless device, a mobile communication device, a tablet, a handset, or another type of wireless communication device. The mobile device can include one or more antennas configured to communicate with a transmission station, such as a base station (BS), an eNB, a base band unit (BBU), a remote radio head (RRH), a remote radio equipment (RRE), a relay station (RS), a radio equipment (RE), or another type of wireless wide area network (WWAN) access point. The mobile device can be configured to communicate using at least one wireless communication standard, including 3GPP LTE, WiMAX, high speed packet access (HSPA), Bluetooth, and Wi-Fi. The mobile device can communicate using separate antennas for each wireless communication standard or shared antennas for multiple wireless communication standards. The mobile device can communicate in a wireless local area network (WLAN), a wireless personal area network (WPAN), and/or a WWAN.

FIG. 9 also provides an illustration of a microphone and one or more speakers that can be used for audio input and output from the mobile device. The display screen may be a liquid crystal display (LCD) screen or other type of display screen, such as an organic light emitting diode (OLED) display. The display screen can be configured as a touch screen. The touch screen may use capacitive, resistive, or another type of touch screen technology. An application processor and a graphics processor can be coupled to internal memory to provide processing and display capabilities. A non-volatile memory port can also be used to provide data input/output options to a user. The non-volatile memory port may also be used to expand the memory capabilities of the mobile device. A keyboard may be integrated with the mobile device or wirelessly connected to the mobile device to provide additional user input. A virtual keyboard may also be provided using the touch screen. The screen and/or an input device, such as the keyboard or touch screen, may provide a user input interface for a user to interact with the mobile device.

<u>Examples</u>

The following examples pertain to further embodiments.

Example 1 is a UE capable of directly communicating with one or more other UEs using a 3GPP communication standard. The UE is configured to communicate with one or more peer UEs using the 3GPP communication standard. The UE is configured to identify a gap size for a device-to-device communication and identify a cyclic prefix length for the device-to-device communication. The UE is configured to transmit or decode the device-to-device communication comprising a subframe having a PUSCH structure, the subframe comprising the identified cyclic prefix length and wherein one or more last symbols of the subframe comprise a gap of the identified gap size.

In Example 2, the subframe of Example 1 includes a first subframe and the gap includes a first gap, wherein the device-to-device communication further includes a second subframe that is nonconsecutive in time with the first subframe. The second subframe includes a second gap in the one or more last symbols having the identified gap size.

In Example 3, the UE of any of Examples 1-2 is further configured to receive a signal indicating the cyclic prefix length. Identifying the cyclic prefix length includes determining based on the signal indicating the cyclic prefix length.

In Example 4, the signal indicating the cyclic prefix length of any of Examples 1-3 includes one or more of: a SIB broadcast by an eNB when the UE is within network coverage; information from the SIB broadcast forwarded by the one or more other UEs when the UE is within partial network coverage; and a signal from a centralized device-to-device peer UE when the UE is out of network coverage.

In Example 5, the UE of any of Examples 1-4 is configured to identify the cyclic prefix length by determining a pre-configured cyclic prefix length for a set of one or more pre-configured resources for one or more of partial and out of network coverage operation.

In Example 6, the UE of any of Examples 1-5 is further configured to receive one or more of a device-to-device synchronization signal, a device-to-device discovery channel signal, and a device-to-device shared channel signal, and identifying the cyclic prefix length includes blind detection of the cyclic prefix length based on one or more of the device-to-device synchronization signal, the device-to-device discovery channel signal, and the device-to-device shared channel signal.

In Example 7, identifying the cyclic prefix length in any of Examples 1-6 includes identifying the cyclic prefix length based on preamble of one or more of the device-to-device synchronization signal, the device-to-device discovery channel signal, and the device-to-device shared channel signal.

Example 8 is a wireless communication device that includes a communication component, a guard period component, a cyclic prefix component, and a decoding component. The communication component is configured to receive a device-to-device communication comprising a subframe comprising a plurality of SC-FDMA symbols. The guard period component is configured to determine a guard period length for the device-to-device communication for a gap in one or more last SC-FDMA symbols of the subframe. The cyclic prefix component is configured to determine a cyclic prefix length for the device-to-device communication or discovery. Determining the cyclic prefix length includes determining based on a higher-layer signal received from a base station when the wireless communication device is within network coverage. The higher-layer signal indicates the cyclic prefix length for the associated set of physical resources. The decoding component is configured to decode the device-to-device communication based on the guard period length and the cyclic prefix length.

In Example 9, the guard period component of Example 8 determines the guard period length by blindly detecting the guard period length in the one or more last SC-FDMA symbols.

In Example 10, the guard period component of any of Examples 8-9 blindly detects the guard period length using energy detection for the one or more last SC-FDMA symbols.

In Example 11, the guard period component of any of Examples 8-10 determines the guard period length based on the broadcast signal received from the base station when the wireless communication device is within network coverage, wherein the broadcast signal further indicates the guard period length.

In Example 12, the cyclic prefix component of any of Examples 8-11 is configured to determine the cyclic prefix length based on a preamble of one or more of a device-to-device synchronization signal, a device-to-device discovery signal, and a device-to-device data signal.

In Example 13, the higher-layer signal of any of Examples 8-12 is transmitted by an eNB when the wireless communication device is within network coverage.

In Example 14, the cyclic prefix component of any of Examples 8-13 is further configured to determine the cyclic prefix length in accordance with a pre-configured cyclic prefix length for a pre-configured set of physical resources for partial or out of network coverage.

In Example 15, the cyclic prefix component of any of Examples 8-14 is further configured to determine the cyclic prefix length based on information from a broadcast signal forwarded by a peer wireless communication device when the wireless communication device is within partial network coverage.

In Example 16, the cyclic prefix component of any of Examples 8-15 is further configured to determine the cyclic prefix length based on a signal from a centralized peer wireless communication device when the wireless communication device is out of network coverage.

In Example 17, the cyclic prefix component of any of Examples 8-16 is further configured to use an extended cyclic prefix length when the wireless communication device is out of network coverage.

Example 18 is an eNB configured to determine one or more sets of wireless physical resources for peer-to-peer communications using a licensed wireless spectrum. The eNB is configured to determine a cyclic prefix length for the peer-to-peer communications for each set of wireless physical resources. The eNB is configured to broadcast a SIB wherein the SIB includes information indicating the one or more wireless resources for the peer-to-peer communications and further includes information indicating a cyclic prefix length for each set of wireless physical resources for the peer-to-peer communications.

In Example 19, the SIB of Example 18 further includes information indicating a gap size for one or more last symbols of a peer-to-peer communication subframe.

In Example 20, the information indicating the gap size of any of Examples 18-19 indicates a gap size of one of: one-half symbol, one symbol, and two symbols.

Example 21 is a method that includes communicating, using a UE capable of directly communicating with one or more other UEs using a 3GPP communication standard, with one or more peer UEs using the 3GPP communication standard. The method includes identifying a gap size for a device-to-device communication. The method includes identifying a cyclic prefix length for the device-to-device communication. The method includes transmitting or decoding the device-to-device communication comprising a subframe having a PUSCH structure. The subframe includes the identified cyclic prefix length and one or more last symbols of the subframe includes a gap of the identified gap size.

In Example 22, the subframe of Example 21 includes a first subframe and the gap includes a first gap. The device-to-device communication further includes a second subframe that is nonconsecutive in time with the first subframe. The second subframe includes a second gap in the one or more last symbols having the identified gap size.

In Example 23, the method of any of Examples 21-22 further includes receiving a signal indicating the cyclic prefix length and identifying the cyclic prefix length includes determining based on the signal indicating the cyclic prefix length.

In Example 24, the signal indicating the cyclic prefix length of Example 23 includes one or more of: a SIB broadcast by an eNB when the UE is within network coverage; information from the SIB broadcast forwarded by the one or more other UEs when the UE is within partial network coverage; and a signal from a centralized device-to-device peer UE when the UE is out of network coverage.

In Example 25, identifying the cyclic prefix length of any of Examples 21-24 includes determining a pre-configured cyclic prefix length for a set of one or more pre-configured resources for one or more of partial and out of network coverage operation.

In Example 26, the method of any of Examples 21-25 further includes receiving one or more of a device-to-device synchronization signal, a device-to-device discovery channel signal, and a device-to-device shared channel signal, and identifying the cyclic prefix length comprises blind detection of the cyclic prefix length based on one or more of the device-to-device synchronization signal, the device-to-device discovery channel signal, and the device-to-device shared channel signal.

In Example 27, identifying the cyclic prefix length of any of Examples 21-26 includes identifying the cyclic prefix length based on preamble of one or more of the device-to-device synchronization signal, the device-to-device discovery channel signal, and the device-to-device shared channel signal.

Example 28 is a method that includes receiving, at a wireless communication device, a device-to-device communication comprising a subframe comprising a plurality of SC-FDMA symbols. The method includes determining a guard period length for the device-to-device communication for a gap in one or more last SC-FDMA symbols of the subframe. The method includes determining a cyclic prefix length for the device-to-device communication or discovery. Determining the cyclic prefix length includes determining based on a higher-layer signal received from a base station when the wireless communication device is within network coverage. The higher-layer signal indicates the cyclic prefix length for the associated set of physical resources. The method includes decoding the device-to-device communication based on the guard period length and the cyclic prefix length.

In Example 29, determining the guard period length in Example 28 includes blindly detecting the guard period length in the one or more last SC-FDMA symbols.

In Example 30, blindly detecting the guard period length in Example 29 includes using energy detection for the one or more last SC-FDMA symbols.

In Example 31, determining the guard period length in any of Examples 28-30 includes determining the guard period length based on the broadcast signal received from the base station when the wireless communication device is within network coverage, wherein the broadcast signal further indicates the guard period length.

In Example 32, determining the cyclic prefix length in any of Examples 28-30 includes determining based on a preamble of one or more of a device-to-device synchronization signal, a device-to-device discovery signal, and a device-to device data signal.

In Example 33, the higher-layer signal in of any Examples 28-31 is transmitted by an eNB when the wireless communication device is within network coverage.

In Example 34, the method of any of Examples 28-33 further includes determining the cyclic prefix length in accordance with a pre-configured cyclic prefix length for a pre-configured set of physical resources for partial or out of network coverage.

In Example 35, determining the cyclic prefix length in any of Examples 28-34 includes determining based on information from a broadcast signal forwarded by a peer wireless communication device when the wireless communication device is within partial network coverage.

In Example 36, determining the cyclic prefix length in any of Examples 28-35 includes determining based on a signal from a centralized peer wireless communication device when the wireless communication device is out of network coverage.

In Example 37, the method of any of Examples 28-26 further includes using an extended cyclic prefix length when the wireless communication device is out of network coverage.

Example 38 is a method that includes determining, at an eNB, one or more sets of wireless physical resources for peer-to-peer communications using a licensed wireless spectrum. The method includes determining a cyclic prefix length for the peer-to-peer communications for each set of wireless physical resources. The method includes broadcasting a SIB wherein the SIB includes information indicating the one or more wireless resources for the peer-to-peer communications and further includes information indicating a cyclic prefix length for each set of wireless physical resources for the peer-to-peer communications.

In Example 39, the SIB of Example 38 further includes information indicating a gap size for one or more last symbols of a peer-to-peer communication subframe.

In Example 40, the information indicating the gap size in any of Examples 38-39 indicates a gap size of one of: one-half symbol, one symbol, and two symbols.

Example 41 is an apparatus that includes means to perform a method as described in any of Examples 21-40.

Example 42 is machine readable storage including machine-readable instructions, when executed, to implement a method or realize an apparatus as described in any of Examples 21-41.

Various techniques, or certain aspects or portions thereof, may take the form of program code (i.e., instructions) embodied in tangible media, such as floppy diskettes, CD-ROMs, hard drives, a non-transitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, an EPROM, a flash drive, an optical drive, a magnetic hard drive, or another medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Reference throughout this specification to "an example" means that a particular feature, structure, or characteristic described in connection with the example is included in at least one embodiment of the present invention. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the invention is not to be limited to the details given herein, but may be modified within the scope of the appended claims.

Those having skill in the art will appreciate that many changes may be made to the details of the above-described embodiments without departing from the underlying principles of the invention. The scope of the present invention should, therefore, be determined only by the following claims.

**Claims**

1. An apparatus for use in a user equipment, UE, comprising:

    a communication component (502) configured to communicate with an evolved Node B, eNB; a guard period component (504) configured to determine a guard period length for a D2D communication by selecting a guard period length from a plurality of predefined guard period lengths, wherein a larger guard period length is selected when a D2D communication channel is poorer, and a smaller guard period length is selected when the D2D communication channel is better; a cyclic prefix component (506) configured to determine a cyclic prefix length for receiving or transmitting the D2D communication; and
    a decoding component (508) configured to decode the D2D communication based on the guard period length and the cyclic prefix length determined by the guard period component (504) and the cyclic prefix component (506).

2. The apparatus of claim 1, wherein the cyclic prefix length is defined as a length of either a normal cyclic prefix corresponding to seven symbols in a slot of a direct communication link subframe or an extended cyclic prefix corresponding to six symbols in the slot of the direct communication link subframe.

3. A method for a user equipment, UE, comprising: determining, by a guard period component (504), a guard period length for a D2D communication by selecting a guard period length from a plurality of predefined guard period lengths, wherein a larger guard period length is selected when a D2D communication channel is poorer, and a smaller guard period length is selected when the D2D communication channel is better;
    determining, by a cyclic prefix component (506), a cyclic prefix length for receiving or transmitting the D2D communication; and
    decoding, by a decoding component (508) the D2D communication based on the guard period length and the cyclic prefix length determined by the guard period component (504) and the cyclic prefix component (506).

4. Machine-readable storage including machine-readable instructions which, when loaded into a user equipment, UE, cause the UE to implement the method of claim 3.

**Patentansprüche**

1. Vorrichtung zur Verwendung in einem Benutzer-Equipment (UE), umfassend:

    eine Kommunikationskomponente (502), ausgelegt zum Kommunizieren mit einem "evolved Node B" (eNB);
    eine Schutzintervallkomponente (504), ausgelegt zum Festlegen der Länge eines Schutzintervalls für eine D2D-Kommunikation durch Auswahl einer Länge eines Schutzintervalls aus einer Mehrzahl von vordefinierten Längen von Schutzintervallen, wobei eine größere Länge eines Schutzintervalls ausgewählt wird, wenn ein D2D-Kommunikationskanal schlechter ist, und eine kürzere Länge eines Schutzintervalls ausgewählt wird, wenn der D2D-Kommunikationskanal besser ist; eine zyklische Präfixkomponente (506), ausgelegt zum Festlegen einer Länge eines zyklischen Präfixes zum Empfangen oder Senden der D2D-Kommunikation; und
    eine Decodierkomponente (508), ausgelegt zum Decodieren der D2D-Kommunikation basierend auf der durch die Schutzintervallkomponente (504) und die zyklische Präfixkomponente (506) festgelegten Länge des Schutzintervalls und der Länge des zyklischen Präfixes.

2. Vorrichtung nach Anspruch 1, wobei die Länge des zyklischen Präfixes definiert ist als eine Länge entweder eines normalen zyklischen Präfixes, entsprechend sieben Symbolen in einem Slot eines Subframes der direkten Kommunikationsverbindung, oder eines erweiterten zyklischen Präfixes, entsprechend sechs Symbolen im Slot des Subframes der direkten Kommunikationsverbindung.

3. Verfahren für ein Benutzer-Equipment (UE), umfassend: Festlegen, durch eine Schutzintervallkomponente (504), einer Länge eines Schutzintervalls für eine D2D-Kommunikation aus einer Mehrzahl von vordefinierten Längen von Schutzintervallen, wobei eine größere Länge eines Schutzintervalls ausgewählt wird, wenn ein D2D-Kommunikationskanal schlechter ist, und eine kürzere Länge eines Schutzintervalls ausgewählt wird, wenn der D2D-Kommunikationskanal besser ist;

Festlegen einer Länge eines zyklischen Präfixes zum Empfangen oder Senden der D2D-Kommunikation durch eine zyklische Präfixkomponente (506); und

Decodieren der D2D-Kommunikation durch eine Decodierkomponente (508), basierend auf der durch die Schutzintervallkomponente (504) und die zyklische Präfixkomponente (506) festgelegten Länge des Schutzintervalls und der Länge des zyklischen Präfixes.

4. Maschinenlesbarer Speicher, aufweisend maschinenlesbare Anweisungen, die beim Laden in ein Benutzer-Equipment (UE) das UE veranlassen, das Verfahren nach Anspruch 3 zu implementieren.


**Revendications**

1. Appareil destiné à être utilisé dans un équipement d'utilisateur (UE), l'appareil comprenant :

   un composant de communication (502), configuré pour communiquer avec un noeud B évolué (eNB) ;
   un composant de période de garde (504), configuré pour déterminer une durée de période de garde pour une communication D2D en sélectionnant une durée de période de garde parmi une pluralité de durées de période de garde prédéfinies, une plus longue durée de période de garde étant sélectionnée quand un canal de communication D2D est de plus faible qualité, et une plus courte durée de période de garde étant sélectionnée quand le canal de communication D2D communication est de meilleure qualité ;
   un composant de préfixe cyclique (506), configuré pour déterminer une longueur de préfixe cyclique pour recevoir ou émettre la communication D2D ; et
   un composant de décodage (508), configuré pour décoder la communication D2D sur la base de la durée de période de garde et de la longueur de préfixe cyclique déterminées par le composant de période de garde (504) et le composant de préfixe cyclique (506).

2. Appareil selon la revendication 1, dans lequel la longueur de préfixe cyclique est définie comme étant une longueur d'un préfixe cyclique normal correspondant à sept symboles dans un créneau d'une sous-trame de liaison de communication directe ou d'un préfixe cyclique étendu correspondant à six symboles dans le créneau de la sous-trame de liaison de communication directe.

3. Procédé relatif à un équipement d'utilisateur (UE), le procédé consistant à :

   déterminer, par un composant de période de garde (504), une durée de période de garde pour une communication D2D en sélectionnant une durée de période de garde parmi une pluralité de durées de période de garde prédéfinies, une plus longue durée de période de garde étant sélectionnée quand un canal de communication D2D est de plus faible qualité, et une plus courte durée de période de garde étant sélectionnée quand le canal de communication D2D communication est de meilleure qualité ;
   déterminer, par un composant de préfixe cyclique (506), une longueur de préfixe cyclique pour recevoir ou émettre la communication D2D ; et
   décoder, par un composant de décodage (508), la communication D2D sur la base de la durée de période de garde et de la longueur de préfixe cyclique déterminées par le composant de période de garde (504) et le composant de préfixe cyclique (506).

4. Stockage lisible par machine comprenant des instructions lisibles par machine qui, lorsqu'elles sont chargées dans un équipement d'utilisateur (UE), amènent l'UE à mettre en oeuvre le procédé selon la revendication 3.

FIG. 1

Radio Frame

Slot

Subframe

Subcarrier

Resource Element

Resource Block

Symbol

FIG. 2

304

302

$M_{RB}^{D2D}$

$m_{RB}^{start}$

$n_{SF}^{start}$  $N_{SF}^{D2D}$

☐ LTE Operation Zone

▨ Discovery Zone

## FIG. 3

400

402  404  406  408

☐ Data

▨ Unused

▨ AGC RS

▨ DMRS

## FIG. 4

```
┌─────────────────────────────────────────────────┐
│               User Equipment (UE)                │
│                      104                         │
│                                                  │
│   ┌──────────────────┐   ┌──────────────────┐   │
│   │  Communication   │   │   Guard Period   │   │
│   │    Component     │   │    Component     │   │
│   │       502        │   │       504        │   │
│   └──────────────────┘   └──────────────────┘   │
│                                                  │
│   ┌──────────────────┐   ┌──────────────────┐   │
│   │  Cyclic Prefix   │   │     Decoding     │   │
│   │    Component     │   │    Component     │   │
│   │       506        │   │       508        │   │
│   └──────────────────┘   └──────────────────┘   │
│                                                  │
└─────────────────────────────────────────────────┘
```

## FIG. 5

600

```
        ┌──────────────────────────────┐
        │   Identify a gap size for a D2D │
  602   │  communication predefined by a │
        │     communication standard     │
        └──────────────────────────────┘
                       │
                       ▼
        ┌──────────────────────────────┐
  604   │  Identify a cyclic-prefix length for │
        │      the D2D communication     │
        └──────────────────────────────┘
                       │
                       ▼
        ┌──────────────────────────────┐
        │ Transmit the D2D communication │
        │  with the cyclic prefix length and │
  606   │ wherein one or more last symbols │
        │  of the subframe comprise a gap │
        │  comprising the identified gap size │
        └──────────────────────────────┘
```

## FIG. 6

800

802 — Determine one or more wireless resources for peer-to-peer communications using a licensed wireless spectrum

804 — Determine a cyclic prefix length for the peer-to-peer communications

806 — Broadcast an SIB wherein the SIB includes information indicating the one or more wireless resources for the peer-to-peer communications and information indicating a cyclic prefix length for the peer-to-peer communications

FIG. 8

700

702 — Receive a D2D communication having a subframe with a plurality of OFDM symbols

704 — Determine a guard period length for a gap in one or more last OFDM symbols of the subframe

706 — Determine a cyclic prefix length based on a broadcast signal received from a base station

708 — Decode the D2D communication based on the guard period length and the cyclic prefix length

FIG. 7

Mobile Device

Multiple Antennas

Non-Volatile Memory Port

Liquid Crystal Display (LCD) Screen and/or Touch Screen Display

Speaker

Speaker

Application Processor

Graphics Processor

Internal Memory

Keyboard

Microphone

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TSG RAN WG1 Meeting #75, R1-135047,* 11 November 2013
- *3GPP TSG RAN WG1 Meeting #75, R1-135903,* 11 November 2013
- *3GPP TSG RAN WG1 Meeting #76, R1-140097,* 10 February 2014